# EUROPÄISCHE PATENTANMELDUNG

(11) **EP 3 846 383 A1**
(43) Veröffentlichungstag der Anmeldung: **07.07.2021**
(21) Anmeldenummer: 19220093.9
(22) Anmeldetag: 30.12.2019
(51) Int. Cl.: H04L 9/32

(54) **KRYPTOGRAPHISCHES SIGNATURSYSTEM**

(71) Anmelder: QuantiCor Security GmbH, 64295 Darmstadt (DE)
(72) Erfinder: Bansarkhani, Dr. Rachid El, 64295 Darmstadt (DE)
(74) Vertreter: Limbeck, Achim

(57) **Zusammenfassung**

Die vorliegende Erfindung betrifft ein kryptographisches Signatursystem (100) zur Erstellung von kryptografischen Signaturen mittels einer oder mehreren Signaturvorrichtungen (103), welche es erlauben, Signaturen für Nachrichten zu generieren. Das erfindungsgemäße Signatursystem (100) ist dadurch gekennzeichnet, dass zur Erstellung mindestens einer Signatur mindestens eine Wurzel oder mindestens ein innerer Knoten von mindestens einem Hash-Baum oder von mindestens einer Baumstruktur mit mindestens zwei Blättern oder mit mindestens zwei Knoten einfließt, wobei
c) mindestens eine kryptografische Bindung, die aus mindestens einem Maskierungsterm ermittelt wird, in die Berechnung von mindestens einem Blatt oder von mindestens einem Knoten einfließt, und
d) bei mindestens einem Maskierungsterm die Verwerfungsmethode angewendet wird.

## Beschreibung

### Technisches Gebiet

Die vorliegende Erfindung betrifft ein kryptographisches Signatursystem zur Erstellung von kryptografischen Signaturen mittels einer oder mehreren Signaturvorrichtungen, welche es erlauben, Signaturen für Nachrichten zu generieren. Als Signaturvorrichtung sei nachstehend jegliche Hardware oder Software verstanden, welche kryptografische Signaturen generiert. Kryptografische Signatursysteme stellen auch kryptografische Beweissysteme dar, wobei Signaturen auch kryptografische Beweise umfassen.

### Stand der Technik

Ein Signatursystem ermöglicht es, gültige Signaturen für Nachrichten zu generieren. Kryptografische Signaturen können nur mit Hilfe von geheimen Schlüsseln erzeugt werden. Signaturverfahren und Beweissysteme garantieren Unverfälschbarkeit, da Signaturen nur von jenen erzeugt werden können, die im Besitz der geheimen Schlüssel oder geheimen Informationen sind, wie einem oder mehreren Signierern bei einem Signatursystem.

Beispielsweise können Signatursysteme dazu verwendet werden, um eine Vielzahl von Anwendungen zu realisieren, wie beispielsweise sichere Updates oder sichere Authentifikation, aber auch anonyme oder blinde Signaturen, datenschutzerhaltende Zahlungssysteme, anonyme Transaktionen innerhalb der Blockchain oder Schwellwert-Signaturen für Blockchain-Transaktionen.

Viele der aktuell eingesetzten Protokolle basieren jedoch auf Rechenproblemen, die anfällig für Quantencomputerangriffe sind. Weiterhin können in einigen Beweis- und Signatursystemen mehrere Signierer oder Teilnehmer, wie z.B. Benutzer, bei der Erstellung von Signaturen partizipieren. Aktuell eingesetzte Signaturverfahren können bei der Anwendung der Verwerfungsmethode sehr ineffizient werden, wie z.B. bei anonymen Signaturen oder Schwellwert-Signaturen, da Protokollwiederholungen nötig sind, sodass ein Einsatz in vielen Szenarien nicht mehr möglich ist oder sich aufgrund dieser Ineffizienzen nicht lohnt.

### Darstellung der Erfindung

Der vorliegenden Erfindung liegt die Aufgabe zugrunde, ein kryptographisches Signatursystem zu schaffen, das die vorgenannten Nachteile ausräumt und das Schutz gegen Quantencomputerangriffe bieten kann.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Signatursystems sind in den abhängigen Unteransprüchen angegeben.

Erfindungsgemäß ist ein Signatursystem der eingangs genannten Art dadurch gekennzeichnet, dass zur Erstellung mindestens einer Signatur mindestens eine Wurzel oder mindestens ein innerer Knoten von mindestens einem Hash-Baum oder von mindestens einer Baumstruktur mit mindestens zwei Blättern oder mit mindestens zwei Knoten einfließt, wobei
a) mindestens eine kryptografische Bindung, die aus mindestens einem Maskierungsterm ermittelt wird, in die Berechnung von mindestens einem Blatt oder von mindestens einem Knoten einfließt, und
b) bei mindestens einem Maskierungsterm die Verwerfungsmethode angewendet wird.

### Kurzbeschreibung der Zeichnungen

Weitere Ziele, Merkmale, Vorteile und Anwendungsmöglichkeiten des erfindungsgemäßen Signatursystems ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

Die vorliegende Erfindung ist dabei nicht auf die offenbarten Konzepte und Formen beschränkt, sondern soll all jene Modifikationen, Äquivalente, Analogone und Alternativen umfassen, die mit dieser Erfindungsmeldung und den in dieser Erfindungsmeldung dargelegten Ansprüchen kompatibel sind. Insbesondere erlauben die dargestellten Ausführungsbeispiele der vorliegenden Erfindung verschiedene Modifikationen und andere mögliche Formen.

Die Ausführungsformen in der vorliegenden Erfindung können dabei in Software, Hardware, Firmware oder Kombinationen davon implementiert sein. Weitere mögliche Implementierungsformen der offenbarten Ausführungsformen können Implementierungen als Anweisungen enthalten, die von einem oder mehreren transitorischen oder nicht transitorischen maschinenlesbaren Speichermedien, die von einem oder mehreren Prozessoren verarbeitet werden, getragen oder auf diesen gespeichert werden.

Die offenbarten Ausführungsformen in der vorliegenden Erfindung können weiterhin Merkmale, Strukturen und/oder Verfahren enthalten, die auf eine bestimmte Weise angeordnet und/oder geordnet sind. Es versteht sich jedoch, dass die Anordnung und/oder Reihenfolge von den in den Ausführungsformen und Figuren der vorliegenden Erfindungsmeldung gezeigten abweichen kann.

In den Zeichnungen zeigen
FIG. 1 ein vereinfachtes Blockdiagramm einer Ausführungsform eines Signatursystems;
FIG. 2 ein vereinfachtes Blockdiagramm einer Ausführungsform einer möglichen Vorrichtung (101) in einem Signatursystem gemäß FIG. 1;
FIG. 3 ein vereinfachtes Blockdiagramm einer Ausführungsform einer Umgebung für eine Vorrichtung (101) gemäß FIG. 2;
FIG. 4 ein vereinfachtes Blockdiagramm einer Ausführungsform einer Umgebung einer Signaturvorrichtung eines Signatursystems gemäß FIG. 1;
FIG. 5 ein vereinfachtes Flussdiagramm einer Ausführungsform eines Verfahrens zum Einrichten eines Signatursystems gemäß FIG. 1;

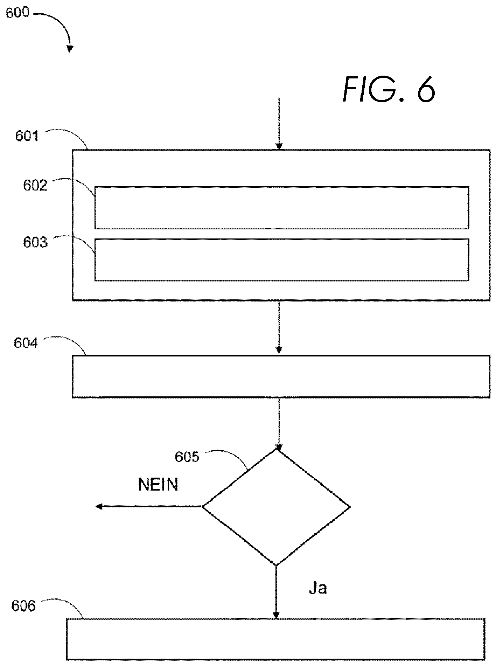

FIG. 6 ein vereinfachtes Flussdiagramm einer Ausführungsform eines Verfahrens zum Erzeugen von Signaturen durch Signaturvorrichtungen (103) des Signatursystems gemäß FIG. 1;

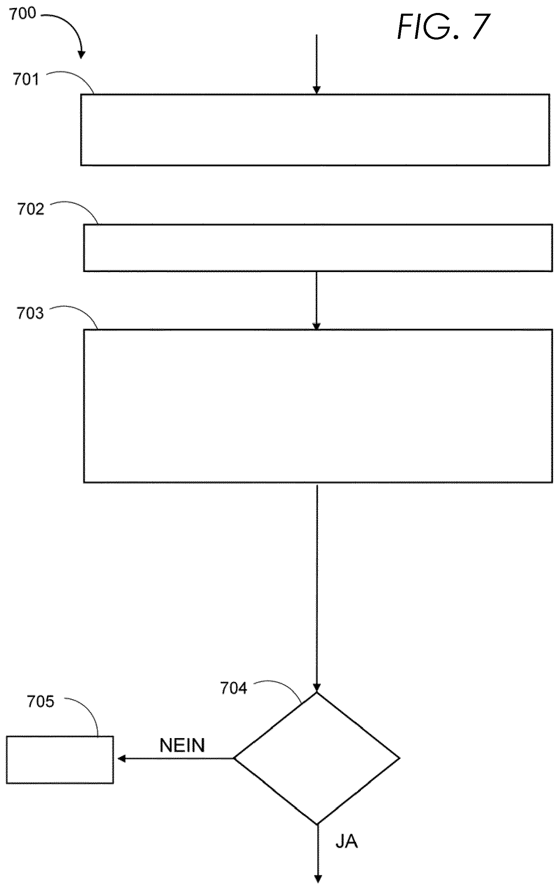

FIG. 7 ein vereinfachtes Flussdiagramm einer Ausführungsform eines Verfahrens zum Verifizieren einer kryptografischen Signatur durch eine Verifiziervorrichtung (104) des Signatursystems gemäß FIG. 1.

### Ausführung der Erfindung

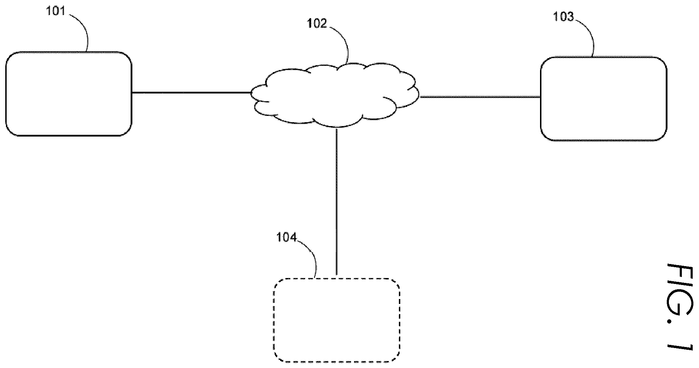

In Fig. 1 wird ein Signatursystem 100 gezeigt. Es versteht sich, dass das vorliegende Signatursystem 100 Quantencomputer-resistente Signaturen ermöglichen kann, wie nachstehend ausführlich beschrieben wird. Genauer gesagt kann das Signatursystem 100 in der veranschaulichenden Ausführungsform Merkmale von Signaturen unter Verwendung Maskierungstechniken, Baumstrukturen oder Hash-Bäumen implementieren. In einigen Ausführungsformen baut das Signatursystem 100 auf bestehenden Signaturverfahren auf, die die Fiat-Shamir-Transformation nutzen, und verwendet zusätzlich Techniken, um die Möglichkeit der anonymen oder verteilten Erzeugung von unverfälschbaren Signaturen zu realisieren, wie z.B. Blindsignaturen, Schwellwert-Signaturen oder Multisignaturen. Es versteht sich, dass das Signatursystem 100 gegenüber Quantencomputerangriffen resistent sein kann. Die Ausführungsform implementiert Unverfälschbarkeit derart, dass eine Teilmenge von Signierern, die einen Teil des privaten Schlüssels halten, gemeinsam gültige Signaturen erzeugen kann.

Es versteht sich, dass die Fiat-Shamir-Transformation einen interaktiven Wissensnachweis (Proof of Knowledge) oder ein Identifikationsverfahren in ein Signaturverfahren umwandelt. Bei einem interaktiven Wissensnachweis überzeugt ein Beweiser (Prover) einen Verifizierer (Verifier), ein Geheimnis zu kennen, das dem Verifizierer nie preisgegeben wird. Nach der Interaktion sollte der Verifizierer überzeugt sein, dass der Beweiser dieses verborgene Geheimnis kennt. Einige gitterbasierte Signatursysteme gehen von einem Identifikationsverfahren aus, bei dem der Beweiser einen öffentlichen und einen geheimen Schlüssel besitzt. Der Beweiser identifiziert sich, indem er ohne Preisgabe des geheimen Schlüssels mittels eines kenntnisfreien Beweises nachweist, dass er den zum öffentlichen Schlüssel assozierten geheimen Schlüssel besitzt. Das Identifikationsverfahren kann unter Verwendung der Fiat-Shamir-Transformation in ein Signatursystem umgewandelt werden.

Gemäß dem Diagramm in FIG. 1 umfasst das Signatursystem 100, eine oder mehrere Signaturvorrichtungen 103, ein Kommunikationsnetz 102, eine oder mehrere Verifiziervorrichtungen 104 und eine oder mehrere Vorrichtungen 101. In einigen Ausführungsformen sind keine Vorrichtungen 101 notwendig. In einigen Ausführungsformen kommunizieren mehrere Signaturvorrichtungen 103 über ein Netzwerk miteinander. In einigen anderen Ausführungsformen kann das Signatursystem 100 mehrere Kommunikationsnetzwerke 102, Vorrichtungen 101, Signaturvorrichtungen 103 und Verifiziervorrichtungen 104 umfassen, wobei die Kommunikation zwischen der Vorrichtung 101 oder der Signaturvorrichtung 103 und den Verifiziervorrichtungen 104 oder die Kommunikation zwischen der Vorrichtung 101 und den Signaturvorrichtungen 103 über verschiedene Netzwerke 104 hergestellt werden können.

In einigen Ausführungsformen kann die Vorrichtung 101 auch durch eine Signaturvorrichtung 103 oder Verifiziervorrichtung 104 gegeben sein. In einigen anderen Ausführungsformen kann die Signaturvorrichtung 103 auch mit einer anderen Vorrichtungen 101 kommunizieren. In einigen anderen Ausführungsformen können sich Signaturvorrichtungen 103 bei anderen Verifiziervorrichtungen 104 oder Vorrichtungen 101 authentifizieren.

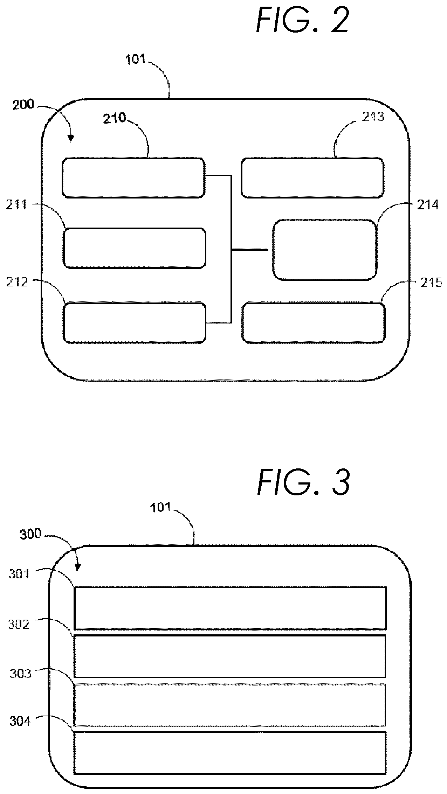

Bezugnehmend auf FIG. 2 können jede Vorrichtung 101, jede Signaturvorrichtung 103 und jede Verifiziervorrichtung 104 als irgendeine Form von Computervorrichtung verkörpert sein, die die Fähigkeiten hat, die Daten zu verarbeiten und die Funktionen hierin zu berechnen. Beispielsweise kann in einigen Ausführungsformen jedes Gerät als Server, Desktop-Computer, Laptop-Computer, Notebook, Netbook, tragbares Computergerät, Router, Mobiltelefon, Smartphone, mobiles Internetgerät und / oder andere alternative Computer- oder Kommunikationsgeräte ausgeführt sein. Jede Vorrichtung 101, jede Signierervorrichtung 103 und jede Verifiziervorrichtung 104 kann einen Prozessor 213, ein Eingabe- / Ausgabesystem ("E / A" -System) 210, einen Speicher 215, einen Datenspeicher 212, ein Kommunikationssystem 211 und ein oder mehrere Eingabe- / Ausgabegeräte oder Peripheriegeräte 214 beinhalten. In einigen Ausführungsformen kann jedes Gerät andere und / oder unterschiedlich weitere Komponenten enthalten. Beispielsweise kann es Komponenten enthalten, die üblicherweise in herkömmlichen Computergeräten zu finden sind (z. B. verschiedene Eingabe-/ Ausgabegeräte, Peripheriegeräte und / oder andere Komponenten).

Bezugnehmend auf FIG. 3 erzeugt jede Vorrichtung 101 eine Umgebung 300 für kryptografische Signaturen. Die Umgebung kann so zusammengesetzt sein, dass sie ein Kryptografiemodul, ein Kommunikationsmodul, ein Verifizierungsmodul und ein Signaturmodul umfasst. Jedes der Module kann in Form von Software, Hardware, Firmware oder Kombinationen davon vorliegen.

Bezugnehmend auf FIG. 3 ist das Signaturmodul derart implementiert, um kryptografische Signaturen in Verbindung mit dem Kryptografiemodul basierend auf den in dieser Erfindungsmeldung beschriebenen Techniken zu erzeugen.

Das Kryptografiemodul 303 ist derart implementiert, um verschiedene kryptografische Funktionalitäten und / oder andere Sicherheitsfunktionen in der Vorrichtung 101 auszuführen. In einigen Ausführungsformen können diese Funktionen in Software / Firmware und / oder auf Hardware ausgeführt werden, wie z.B. ein unabhängiger Krypto-Co-Prozessor ("*Security Co-Processor"*), eine Krypto-Engine ("*Cryptographic Engine*"), ein Krypto-Beschleuniger ("*Cryptographic Accelerator*") in einem Prozessor 213 oder andere Hardware. In einigen Ausführungsformen kann die Erzeugung von kryptografischem Schlüsselmaterial für verschiedene kryptografische Funktionen wie Verschlüsselung, Entschlüsselung, Signaturerzeugung und Verifizierung auch durch das Kryptografiemodul 303 ausgeführt werden. Dies umfasst in einigen Ausführungsformen auch die sichere Kommunikation mit anderen entfernten Geräten.

Das Überprüfungsmodul 302 ist derart implementiert, um die Gültigkeit einer Signatur zusammen mit einer signierten Nachricht, die von Signaturvorrichtungen 103 empfangen wurden, zu überprüfen. In einigen Ausführungsformen kann ein Überprüfungsgerät 104 eine Vorrichtung 101, eine Signaturvorrichtung 103 oder ein beliebiges anderes Computergerät sein.

Das Kommunikationsmodul 304 ist derart implementiert, um die Kommunikationsabfragen zwischen Rechengeräten wie der Signaturvorrichtung 103, dem Verifizierungssystem 104 und der Vorrichtung 101 zu verwalten und zu verarbeiten.

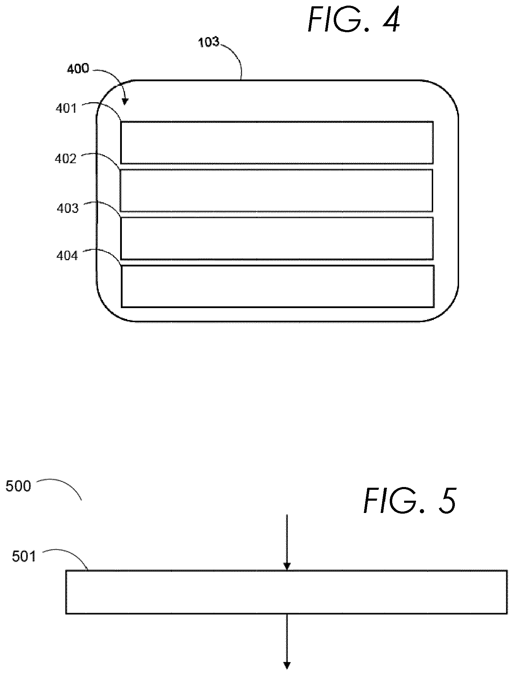

Bezugnehmend auf FIG. 4 erzeugt jede Signaturvorrichtung 103 eine Umgebung 400 für kryptografische Signaturen. Die Umgebung kann so ausgeführt sein, dass sie ein Signaturmodul 401, ein Überprüfungsmodul 402, ein Kryptografiemodul 403 und ein Kommunikationsmodul 404 ähnlich der in FIG. 3 beschriebenen Vorrichtung 101 enthält. Es versteht sich, dass das Signaturmodul 401 derart implementiert ist, dass es in Verbindung mit dem Kryptografiemodul 403 zum Erzeugen von kryptografischen Bindungen ("Commitments") und kryptografischen Beweisen sowie Signaturteilen unter Nutzung des privaten Schlüssels für Signatursysteme verwendet wird. Es versteht sich, dass ein oder mehrere Signierer die Erstellung von Signaturen oder Signaturen mit speziellen Eigenschaften mittels einer oder mehreren Signatuvorrichtungen 103 mit oder ohne Vorrichtungen 101 vornehmen können.

Eine detaillierte Implementierung wird unten für eine beispielhafte Ausführungsform des Signatursystems angegeben.

### Detaillierte Ausführung der Erfindung

In Block 501 werden öffentliche und/oder geheime Schlüssel oder Elemente generiert.

In einem Ausführungsbeispiel können die geheimen Schlüssel durch Elemente z und die öffentlichen Schlüssel durch *A* und *t* gegeben sein, wobei *t* = *A* · *z mod q.*

In einem Ausführungsbeispiel werden die geheimen und öffentlichen Schlüssel von den Signaturvorrichtungen 103 generiert.

In einem anderen Ausführungsbeispiel werden die öffentlichen und geheimen Elemente von einer Vorrichtung 101 generiert.

In Block 602 werden Maskierungsterme *yᵢ* generiert und daraus kryptografische Bindungen *ŷᵢ* berechnet, wobei mehrere kryptografische Bindungen *ŷᵢ* in mindestens eine Baumstruktur oder mindestens ein Hash-Baum mit mehr als zwei Knoten einfließen.

In Block 603 fließt die Wurzel oder ein innerer Knoten von mindestens einer Baumstruktur oder eines Hash-Baums in die Berechnung der Signatur mit ein.

In Block 604 werden private oder geheimzuhaltende Elemente mittels Maskierungstermen und der Anwendung der Verwerfungsmethode stochastisch verborgen. Die Verwerfungsmethode erlaubt es, Zufallszahlen zu einer vorgegebenen Verteilung zu erzeugen.

In einer Ausführungsform fließen die kryptografischen Bindungen *ŷᵢ* in die Berechnung der Blätter eines Hash-Baumes ein.

In einem Ausführungsbeispiel können Blätter oder Knoten eines Baumes mehrfach zur Erzeugung eines Baumes oder mehreren Bäumen oder zur Erzeugung einer Signatur oder mehreren Signaturen genutzt werden.

In einem Ausführungsbeispiel ist die Baumstruktur durch einen gewurzelten Baum gegeben. In einem Ausführungsbeispiel ist eine Baumstruktur durch einen Binärbaum gegeben. In einem anderen Ausführungsbeispiel ist der Baum durch einen ungerichteten Baum gegeben.

In einer Ausführungsform bilden die Hash-Werte der kryptografischen Bindungen *ŷᵢ* die Blätter eines Hash-Baumes, d.h. *H*(*ŷᵢ*) stellt ein Blatt des Hash-Baums dar, wobei H eine Hash-Funktion beschreibt.

In einer Ausführungsform bilden die Hash-Werte von *f*(*ŷᵢ*) die Blätter eines Hash-Baumes, wobei *ŷᵢ* kryptografische Bindungen und *f* eine Abbildung darstellt.

In einer Ausführungsform wird als Hash-Baum ein Merkle-Baum mit Hilfe der kryptografischen Bindungen *ŷᵢ* erzeugt, wobei die Blätter mittels der kryptografischen Bindungen ermittelt werden.

In einem Ausführungsbeispiel wird die Wurzel des Hash-Baumes im Rahmen der Fiat-ShamirTransformation als Eingabe in ein Zufallsorakel oder Quantenzufallsorakel zur Berechnung von kryptografischen Aufforderungen (Challenge) übergeben. In einem anderen Ausführungsbeispiel werden Wurzeln von mehreren Hash-Bäumen als Eingabe übergeben. Diese können von einem Signierer, einer Signaturvorrichtung 103, mehreren Signierern, mehreren Signaturvorrichtungen 103, anderen Vorrichtungen 101 oder anderen Teilnehmern stammen. In einem Ausführungsbeispiel wird eine Wurzel eines Hash-Baumes durch einen Benutzer oder Vorrichtung 101 generiert, der mit einer Signaturvorrichtung interagiert, wie z.B. bei Blindsignatursystemen. In einem Ausführungsbeispiel generiert der Benutzer Maskierungsterme und berechnet daraus kryptografische Bindungen, die mit kryptografischen Bindungen einer Signaturvorrichtung kombiniert werden. Die Hash-Werte der kombinierten kryptografischen Bindungen fungieren als Blätter eines Hash-Baums, dessen Wurzel in die Erzeugung von kryptografischen Aufforderungen im Rahmen der Fiat-Shamir Transformation einfließt. Auf diese Weise können Blindsignaturen erzeugt werden.

In einer Ausführungsform kann ein Zufallsorakel oder Quantenzufallsorakel mittels einer Hash-Funktion oder einem anderen Mechanismus zur Erzeugung von Zufallszahlen instanziiert werden.

In einem anderen Ausführungsbeispiel werden die kryptografischen Bindungen von mehreren Signaturvorrichtungen oder Signierern miteinander kombiniert. Aus den kombinierten kryptografischen Bindungen werden Blätter einer Baumstruktur oder eines Hash-Baumes erzeugt, wobei die Wurzel oder ein innerer Knoten des Baumes in die Berechnung der finalen Signatur einfließt.

In einem Ausführungsbeispiel fließen die Wurzeln oder innere Knoten von Hash-Bäumen von mehr als einer Signaturvorrichtung 103 in die Berechnung der Signatur mit ein.

Der Ausgang der Verwerfungsmethode wird in Block 605 überprüft. War die Anwendung der Verwerfungsmethode erfolgreich, so kann die Signatur ausgegeben werden. Wenn die Verwerfungsmethode nicht erfolgreich war, können in Block 604 oder Block 601 andere oder neu generierte Maskierungsterme zum Verbergen der geheimzuhaltenden Elemente verwendet werden, bis die Verwerfungsmethode erfolgreich ist.

In einem Ausführungsbeispiel werden die in Block 602 bereits erzeugten Maskierungsterme nacheinander in Block 604 verbraucht, bis die Verwerfungsmethode erfolgreich ist. Sollten alle Maskierungsterme aufgebraucht sein und die Verwerfungsmethode dennoch nicht erfolgreich sein, so werden in Block 601 neue Maskierungsterme und ein neuer Baum erzeugt.

In einem Ausführungsbeispiel erzeugen mehrere Signaturvorrichtungen 103 ihre Maskierungsterme und kombinieren die kryptografischen Bindungen miteinander und führen Block 604 unabhängig voneinander aus.

In einem Ausführungsbeispiel wird mindestens ein Authentifikationspfad eines Baumes als Teil der Signatur oder Beweises ausgegeben. Mit der Hilfe des Authentifikationspfades kann die Wurzel des Baumes rekonstruiert oder verifiziert werden.

In Block 605 wird die Signatur an eine Verifiziervorrichtung 104 übertragen.

In Block 701 wird die Signatur von der Verifiziervorrichtung 104 empfangen.

In Block 702 wird der öffentliche Schlüssel bestimmt.

Die Verifiziervorrichtung 104 überprüft in Block 703, ob die Signatur gültig ist.

In Block 704 wird der Ausgang der Überprüfung bestimmt.

Wenn die Signatur ungültig ist, so werden in Block 705 entsprechende Maßnahmen ergriffen.

In einem Ausführungsbeispiel fließt mindestens eine Wurzel eines Hash-Baumes in die Berechnung der Signatur mit ein. Der Verifizierer überprüft dann zusätzlich auch die Gültigkeit des übergebenen Pfades vom Blatt bis zur Wurzel des Baumes. Eine ähnliche Überprüfung des Pfades findet bei Merkle-Bäumen statt. In einem Ausführungsbeispiel kann mit den Informationen aus der Signatur ein Blatt des Baumes berechnet werden und die Wurzel rekonstruiert werden. In einem Ausführungsbeispiel könnte anschließend überprüft werden, ob die ermittelte Wurzel auch in die Berechnung der Signatur eingeflossen ist.

## Patentansprüche

1. Kryptographisches Signatursystem (100) zur Erstellung von Signaturen,
**dadurch gekennzeichnet, dass**
zur Erstellung mindestens einer Signatur mindestens eine Wurzel oder mindestens ein innerer Knoten von mindestens einem Hash-Baum oder von mindestens einer Baumstruktur mit mindestens zwei Blättern oder mit mindestens zwei Knoten einfließt, wobei
a) mindestens eine kryptografische Bindung, die aus mindestens einem Maskierungsterm ermittelt wird, in die Berechnung von mindestens einem Blatt oder von mindestens einem Knoten einfließt, und
b) bei mindestens einem Maskierungsterm die Verwerfungsmethode angewendet wird.

2. Kryptographisches Signatursystem (100) nach Anspruch 1,
**dadurch gekennzeichnet, dass**
a) mehrere Maskierungsterme *yᵢ* erzeugt werden, und
b) kryptografische Bindungen *ŷᵢ* darüber berechnet werden, und
c) aus den kryptografischen Bindungen Blätter eines Hash-Baumes ermittelt werden.

3. Kryptographisches Signatursystem (100) nach Anspruch 1 oder2,
**dadurch gekennzeichnet, dass**
sich mindestens ein Blatt oder mindestens ein Knoten als Hash-Wert von einem Term berechnen lässt, der sich aus mindestens einer kryptografischen Bindung und mindestens einem anderen Term zusammensetzt.

4. Kryptographisches Signatursystem (100) nach Anspruch 3,
**dadurch gekennzeichnet, dass**
sich mindestens ein Blatt oder mindestens ein Knoten als Hash-Wert von der Summe aus einem Term und mindestens einer kryptografischen Bindung zusammensetzt, die sich aus mindestens einem Maskierungsterm ermitteln lässt.

5. Kryptographisches Signatursystem (100) nach einem der vorangegangenen Ansprüche mit mindestens einer Signaturvorrichtung,
**dadurch gekennzeichnet, dass**
mindestens ein Signierer oder mindestens eine Signaturvorrichtung (103)
a) Maskierungsterme *yᵢ* erzeugt sowie kryptografische Bindungen *ŷᵢ* darüber berechnet und Hash-Werte von kryptografischen Bindungen berechnet, die als Blätter eines Hash-Baumes fungieren, und
b) einen kryptografischen Beweis oder Signatur erzeugt, in der die Wurzel des Hash-Baumes einfließt

6. Kryptographisches Signatursystem (100) nach einem der vorangegangenen Ansprüche,
**dadurch gekennzeichnet, dass**
a) Maskierungsterme *yᵢ* erzeugt werden und kryptografische Bindungen darüber berechnet *ŷᵢ* werden, und
b) die kryptografischen Bindungen mit anderen kryptografischen Bindungen kombiniert werden, und
c) kombinierte kryptografische Bindungen in die Berechnung von mindestens einem Knoten einer Baumstruktur oder eines Hash-Baumes oder in die Berechnung der Wurzel von mindestens einer Baumstruktur oder eines Hash-Baumes einfließen.

7. Kryptographisches Signatursystem (100) nach einem der vorangegangenen Ansprüche mit mindestens einer Signaturvorrichtung,
**dadurch gekennzeichnet, dass**
mindestens eine Vorrichtung (101), mindestens eine Signaturvorrichtung (103) oder mindestens ein Signierer Maskierungsterme *yᵢ* erzeugt sowie kryptografische Bindungen darüber berechnet *ŷᵢ*, und die kryptografischen Bindungen mit kryptografischen Bindungen anderer Vorrichtungen, Signierer oder Signaturvorrichtungen kombiniert werden.

8. Kryptographisches Signatursystem (100) nach einem der vorangegangenen Ansprüche,
**dadurch gekennzeichnet, dass**
c) Hash-Werte von kombinierten kryptografischen Bindungen berechnet werden, die als Blätter eines Hash-Baumes fungieren, und
d) die Wurzel des Hash-Baumes in die Erzeugung einer Signatur einfließt.

9. Kryptographisches Signatursystem (100) nach einem der vorangegangenen Ansprüche mit mindestens einer Signaturvorrichtung,
**dadurch gekennzeichnet, dass**
a) mindestens ein Signierer einen kryptografischen Beweis oder Signatur erzeugt, in der die Wurzel eines Hash-Baumes einfließt, und
b) dieser Beweis oder Signatur mit den Beweisen oder Signaturen anderer Signierer zu einem vollwertigen Beweis oder zu einer vollwertigen Signatur kombiniert werden.

10. Kryptographisches Signatursystem (100) nach einem der vorangegangenen Ansprüche,
**dadurch gekennzeichnet, dass**
kryptografische Bindungen von Maskierungstermen *yᵢ* mittels *ŷᵢ* = *A* · *yᵢ mod q* berechnet werden.

11. Kryptographisches Signatursystem (100) nach einem der vorangegangenen Ansprüche,
**dadurch gekennzeichnet, dass**
mindestens ein Merkle-Baum als Baumstruktur verwendet wird, wobei sich mindestens ein Blatt aus mindestens einer kryptografischen Bindung ermitteln lässt, die sich aus mindestens einem Maskierungsterm ermitteln lässt.

12. Kryptographisches Signatursystem (100) nach einem der vorangegangenen Ansprüche,
**dadurch gekennzeichnet, dass**
die Blätter des Baumes Hash-Werte von kryptografischen Bindungen sind.

13. Kryptographisches Signatursystem (100) nach einem der vorangegangenen Ansprüche,
**dadurch gekennzeichnet, dass**
ein kryptografischer Beweis erzeugt wird, in der auch die Wurzel von Hash-Bäumen oder Baumstrukturen anderer Signierer, Signaturvorrichtungen (103) oder anderer Vorrichtungen (101) einfließen.

14. Kryptographisches Signatursystem (100) nach einem der vorangegangenen Ansprüche,
**dadurch gekennzeichnet, dass**
die Fiat-Shamir Transformation zur Erzeugung von Signaturen angewendet wird und die Wurzel von mindestens einem Baum in die Erzeugung von kryptografischen Aufforderungen einfließt.

15. Kryptographisches Signatursystem (100) nach einem der vorangegangenen Ansprüchen,
**dadurch gekennzeichnet, dass**
mindestens eine Signatur auch einen gültigen Authentifikationspfad von einem Blatt bis zur Wurzel enthält.
